# EUROPÄISCHE PATENTSCHRIFT

(11) **EP 0 808 672 B1**
(45) Veröffentlichungstag und Bekanntmachung des Hinweises auf die Patenterteilung: **12.12.2001**
(21) Anmeldenummer: 97107791.2
(22) Anmeldetag: 13.05.1997
(51) Int. Cl.: B21B 1/46, B21B 45/00, C21D 9/00, F27B 9/02

(54) **Verfahren und Anlage zur Herstellung von Edelstahl- oder Kohlenstoffstahlblech aus durch Strangguss erzeugten Dünnbrammen**
Method and installation for manufacturing stainless steel or carbon steel plates from casted thin slabs
Procédé et installation de fabrication des tôles en acier inoxydable ou en acier de carbone à partir des brames minces coulées

(30) Priorität: 25.05.1996 DE 19621259
(43) Veröffentlichungstag der Anmeldung: 26.11.1997
(73) Patentinhaber: SMS Demag AG, 40237 Düsseldorf (DE)
(72) Erfinder: Hofmann, Franz, Dr., 42329 Wuppertal (DE)
(74) Vertreter: Valentin, Ekkehard, Dipl.-Ing.

(56) Entgegenhaltungen:
- EP-A- 0 492 226
- EP-A- 0 625 383
- EP-A- 0 648 552
- WO-A-84/02860
- PATENT ABSTRACTS OF JAPAN vol. 096, no. 002, 29.Februar 1996 & JP 07 268477 A (KYOEI SEIKO KK), 17.Oktober 1995, & US 5 564 178 A (TAKASHIMA ET AL)
- PATENT ABSTRACTS OF JAPAN vol. 007, no. 031 (M-192), 8.Februar 1983 & JP 57 187102 A (SHIN NIPPON SEITETSU KK), 17.November 1982,
- PATENT ABSTRACTS OF JAPAN vol. 002, no. 148 (C-030), 9.Dezember 1978 & JP 53 112248 A (ISHIKAWAJIMA HARIMA HEAVY IND CO LTD), 30.September 1978,
- PATENT ABSTRACTS OF JAPAN vol. 017, no. 284 (M-1421), 31.Mai 1993 & JP 05 015923 A (NIPPON STEEL CORP), 26.Januar 1993,
- PATENT ABSTRACTS OF JAPAN vol. 005, no. 061 (M-065), 24.April 1981 & JP 56 014007 A (NIPPON STEEL CORP), 10.Februar 1981,

## Beschreibung

Die Erfindung betrifft ein Verfahren zur Herstellung von Edelstahl- oder Kohlenstoffstahlblechen aus durch Strangguß erzeugten Dünnbrammen von 40 - 100 mm Dicke, wobei der Dünnbrammenstrang in Abschnitte unterteilt, durch eine Heizlinie gefördert und danach kontinuierlich gewalzt wird, wobei ein Dünnbrammenabschnitt aus einer Produttionslinie beheizt quer in eine Seitenposition gebracht wird.

Durch die EP-A2 0 327 845 ist ein Verfahren und eine Anlage zur Herstellung von warmgewalztem Stahlband aus gegossenen Dünnsträngen bekannt, wobei der Dünnstrang nach der Erstarrung in einem Rollenherdofen auf homogene Walztemperatur gebracht und zum Auswalzen zu Fertigband abschnittsweise in eine mehrgerüstige Fertigstraße eingeführt wird, welcher eine Kühlstrecke und eine Haspeleinrichtung nachgeordnet ist.

Aus der EP 0 648 552 A1 ist eine verfahrbare, gegenüber der Atmosphäre isolierte, Fördereinrichtung bekannt, die zwischen einer zweigliedrigen Stranggießanlage und einer Walzstraße zusammen mit einem ebenfalls verfahrbaren Tunnelofen als Verbindungselement vorgesehen ist. Diese Fördereinrichtung zeichnet sich dadurch aus, daß sie in eine bewegliche Basiseinheit und eine davon unabhängige, nicht verfahrbare, Haube mit den Heizaggregaten getrennt ist.

Es wird eine Gieß-Walz-Linie beschrieben mit einem verfahrbaren Tunnelofen aus einer ersten Position in Verlängerung zu der jeweiligen Gießlinie in eine zweite Position zum Transport der Brammen in einen oder zurück von einem Speichertunnelofen der eine Behandlungseinheit aufweist, die Material von der Oberfläche der Bramme im heißen Zustand entfernt. Aus dieser Position werden die Bammen in eine dritte Position zum Eintritt in die verfahrbare Fördereinrichtung gebracht, die nicht mit der Gießlinie, sondern der Walzstraße fluchtet.

Aus der JP-A-7-268 477 ist ein Tunnelsystem zum Erwärmen einer Bramme bzw. Halten auf einer Temperatur vor Einlaufen in eine Walzstraße bekannt.

Teile des Tunnelsystems können bei Stillstand der Walzstraße ausgeklinkt und darin Brammen gespeichert werden.

Eine Oberflächenbearbeitung unter Längsförderung in der ausgeklinkten Position ist nicht beschrieben.

Bei der Herstellung von Dünnbrammen aus Kohlenstoffstahl oder Edelstahl ist es schwierig, die geforderte Oberflächenqualität über die gesamte Länge des Dünnbrammenstranges zu gewährleisten. Insbesondere die beim Gießbeginn oder nach einer Gießunterbrechung gegossenen ersten Abschnitte der Dünnbrammen können Mängel in der Oberflächenbeschaffenheit aufweisen, die sich als Qualitätsminderung auch im gewalzten Blech auswirken.

Mit der Erfindung soll eine Bearbeitung fehlerhafter Oberflächenabschnitte des gegossenen Brammenstranges ermöglicht werden.

Aufgabe der Erfindung ist die Schaffung eines Verfahrens, womit eine Bearbeitung fehlerhafter Oberflächenabschnitte des gegossenen Dünnbrammenstranges mit geringem Temperaturverlust ohne Unterbrechung des Herstellungsprozesses möglich ist.

Diese Aufgabe wird nach der Erfindung bei dem gattungsgemäßen Verfahren dadurch gelöst, daß die durch die Querförderung des Dünnbrammenabschnitts entstandene ofenlücke durch einen in Warteposition stehenden ofenabschnitt geschlossen wird, der sich in der Seitenposition befindende Dünnbrammenabschnitt unter Längsförderung an den Oberflächen bearbeitet wird, in die Seitenheizposition zurückgefördert und beheizt quer in die Produktionslinie zurückgebracht wird.

Die erfindungsgemäße Oberflächenbearbeitung außerhalb der Fertigungslinie vermeidet eine Unterbrechung des Herstellprozesses. Dabei wird durch die Fortsetzung der Beheizung erreicht, daß die Brammenabschnitte sofort nach der Bearbeitung in den Herstellprozeß zurückgeleitet werden können und Energieverluste gering bleiben.

Die Oberflächenbearbeitung der Dünnbrammenabschnitte kann durch Heißschleifen erfolgen, was insbesondere bei Edelstahlbrammen vorteilhaft ist. Alternativ kann eine Oberflächenbearbeitung durch Flämmen erfolgen.

Bei einer Anlage zur Durchführung des erfindungsgemäßen Verfahrens,die aus einer Stranggießanlage für Dünnbrammen, einer Querteilschere, einem Rollenherdofen und einer Warmwalzstraße besteht, ist der Rollenherdofen über eine Teillänge aus mindestens einem in eine Seitenposition quer verfahrbarem Abschnitt gebildet, wobei die Seitenposition mit einer Oberflächenbearbeitungslinie fluchtet.

Der Rollenherdofen weist zwei Abschnitte auf, die abwechselnd aus der Produktionslinie quer in je eine Seitenposition verfahrbar sind.

Als Oberflächenbearbeitungslinie kann eine Heißschleifvorrichtung vorgesehen sein, der ein Rollgang zugeordnet ist.

Alternativ kann als Oberflächenbearbeitungslinie eine Flämmmaschine mit zugeordnetem Rollgang eingesetzt werden.

Der der Heißschleifvorrichtung bzw. Flämmaschine zugeordnete Rollgang ist vorteilhaft gegen Wärmeverluste abgeschirmt.

In der Zeichnung ist eine Anlage zur Durchführung des Verfahrens mit Merkmalen und Vorteilen schematisch dargestellt.

Es zeigen:
- Fig. 1: eine Anlage zur Herstellung von Edelstahl- oder Kohlenstoffstahlblech von einer Stranggießanlage bis zu einer Warmwalzstraße,

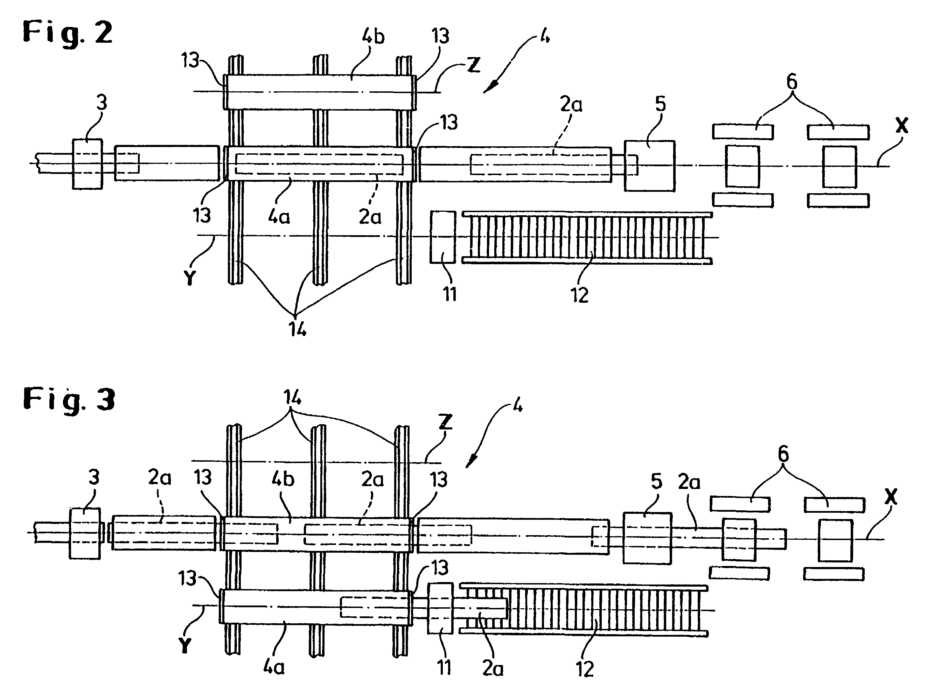

- Fig. 2: die Anlage in Draufsicht und
- Fig. 3: die Anlage bei dem Verfahrensschritt Oberflächenbearbeitung.

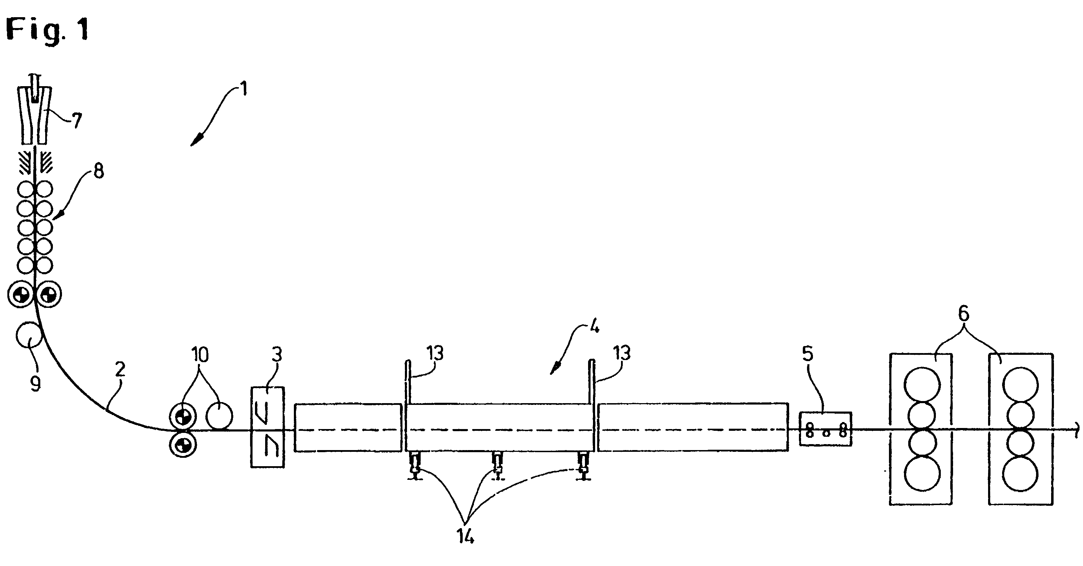

Gemäß Fig. 1 besteht die Anlage zur Herstellung von Blech aus Kohlenstoffstahl oder Edelstahl im wesentlichen aus einer Stranggießanlage 1 für einen Dünnbrammenstrang 2 von 40 - 100 mm Dicke, einer Querteilschere 3 einem Durchlaufofen 4, einer Entzunderungsvorrichtung 5 und einer Walzstraße 6. Die Stranggießanlage 1 besteht aus einer Kokille 7 mit nachgeordneter Strangführung 8 einer Biegerolle 9 und einer Treibrichteinrichtung 10.

Der gegossene Dünnbrammenstrang 2 tritt nach der Umlenkung in die Horizontale in den Durchlaufofen 4 ein und wird durch die Schere 3 in Abschnitte unterteilt. Die im Durchlaufofen auf homogene Walztemperatur erwärmten Dünnbrammenabschnitte 2a werden in der Walzstraße 6 zu Blechbändern ausgewalzt.

Dünnbrammenabschnitte 2a mit unzureichender Oberflächenqualität werden einer Oberflächenbearbeitung zugeführt. Hierzu weist der Durchlaufofen 4 einen auf Schienen 14 aus der Produktionslinie X in eine Seitenposition Y verfahrbaren Ofenabschnitt 4a auf. In der Seitenposition Y fluchtet der Obenabschnitt 4a mit einer aus Heißschleifmaschine 11 und Rollgang 12 bestehenden Oberflächenbearbeitungslinie. Anstelle der Heißschleifmaschine kann eine Flämmeinrichtung zur Oberflächenbearbeitung vorgesehen sein.

Die durch das Herausfahren des Ofenabschnittes 4a entstehende Ofenlücke kann zur Fortsetzung des Herstellungsverfahrens von einem in einer gegenüberliegenden Seitenposition Z wartenden Ofenabschnitt 4b verschlossen werden. Zur Vermeidung von Energieverlusten sind die durch Querverschiebung entstehenden Ofenöffnungen mit Verschlußeinrichtungen 13 versehen.

Das erfindungsgemäße Verfahren wird mit der beschriebenen Anlage wie folgt durchgeführt.

Falls beim Beginn des Gießprozesses oder nach einer Gießunterbrechung ein Abschnitt eines Edelstahlstranges 2 Oberflächenfehler aufweist, wird ein entsprechender Abschnitt 2a durch die Querteilschere 3 abgetrennt und beschleunigt in den Ofenabschnitt 4a gefördert. Durch den Ofenabschnitt 4a wird der Dünnbrammenabschnitt 2a in die Seitenposition Y vor die Heißschleifmaschine 11 transportiert, worauf die entstandene Ofenlücke durch den in Warteposition Z stehenden Ofenabschnitt 4b geschlossen und der Prozess mit Abschnitten 2a besserer Oberflächenqualität fortgesetzt wird. Der zur Oberflächenbearbeitung in die Position Y gebrachte Abschnitt 2a durchläuft anschließend die Heißschleifmaschine 11 bis zum Rollgang 12 und von diesem zurück in den Ofenabschnitt 4a. Der geschliffene Brammenabschnitt 2a wird darauf unter erneuter Beheizung vom Ofenabschnitt 4a zum Auswalzen in die Produktionslinie X zurückgebracht.

## Patentansprüche

1. Verfahren zur Herstellung von Edelstahl- oder Kohlenstoffstahlblechen aus durch Strangguß erzeugten Dünnbrammen von 40 - 100 mm Dicke, wobei der Dünnbrammenstrang in Abschnitte (2a) unterteilt, durch eine Heizlinie (4) gefördert und danach kontinuierlich gewalzt wird, wobei ein Dünnbrammenabschnitt (2a) aus einer Produktionslinie (X) beheizt quer in eine Seitenposition (Y) gebracht wird,
**dadurch gekennzeichnet,**
**daß** die entstandene Ofenlücke durch einen in Warteposition (Z) stehenden Ofenabschnitt (4b) geschlossen wird, daß der sich in der Seitenposition (Y) befindende Dünnbrammenabschnitt unter Längsförderung an den Oberflächen bearbeitet wird, anschließend in die Seitenheizposition zurückgefördert und beheizt quer wieder in die Produktionslinie (X) zurückgebracht wird.

2. Verfahren nach Anspruch 1.
**dadurch gekennzeichnet,**
**daß** die Oberflächen des Dünnbrammenabschnittes (2a) durch Heißschleifen bearbeitet werden.

3. Verfahren nach Anspruch 1,
**dadurch gekennzeichnet,**
**daß** die Oberflächen des Dünnbrammenabschnittes (2a) durch Flämmen bearbeitet werden.

4. Anlage zur Durchführung des Verfahrens nach Anspruch 1, die aus einer Stranggießanlage (1) für Dünnbrammen (2), einer Querteilschere (3), einem Rollenherdofen (4) und einer Warmwalzstraße (6) besteht,
**dadurch gekennzeichnet,**
**daß** der Rollenherdofen (4) über eine Teillänge aus mindestens einem in eine Seitenposition (Y) quer verfahrbaren Abschnitt (4a) gebildet ist und die Seitenposition (Y) mit einer Oberflächenbearbeitungslinie (11, 12) fluchtet und **daß** der Rollenherdofen zwei Abschnitte (4a, 4b) aufweist, die abwechselnd aus der Produktionslinie (X) quer in je eine Seitenposition (Y bzw. Z) verfahrbar sind.

5. Anlage nach Anspruch 4,
**dadruch gekennzelchnet,**
**daß** die Ofenabschnitte (4a, 4b) beidseits mit Endverschlüssen versehen sind.

6. Anlage nach Anspruch 4,
**dadurch gekennzeichnet,**
**daß** die Oberflächenbearbeitungslinie aus einer Heißschleifvorrichtung (11) und zugeordnetem Rollgang (12) besteht.

7. Anlage nach Anspruch 4,
**dadurch gekennzeichnet,**
**daß** die Oberflächenbearbeitungslinie aus einer Flämmmaschine mit zugeordneten Rollgang besteht.

8. Anlage nach den Ansprüchen 6 und 7,
**dadurch gekennzeichnet,**
**daß** der Rollgang (12) gegen Wärmeverluste abgeschirmt ist

## Claims

1. Method of producing stainless steel plates or carbon steel plates from thin slabs of 40 to 100 mm thickness produced by continuous casting, wherein the thin slab strip is subdivided into sections (2a), conveyed through a heating line (4) and thereafter continuously rolled, wherein a thin slab section (2a) is brought, heated, from a production line (X) transversely into a lateral position (Y), **characterised in that** the oven gaps that arise are filled by an oven section (4b) standing in waiting position (Z), and that the thin slab section disposed in the lateral position (Y) is processed at the surface while being conveyed longitudinally, is subsequently conveyed back into the lateral heating position and is brought, heated, transversely back again into the production line (X).

2. Method according to claim 1, **characterised in that** the surfaces of the thin slab section (2a) are processed by hot grinding.

3. Method according to claim 1, **characterised in that** the surfaces of the thin slab section (2a) are processed by flame descaling.

4. Plant for carrying out the method according to claim 1, which consists of a continuous casting plant (1) for thin slabs (2), cross-cutting shears (3), a roller hearth (4) and a hot rolling train (6), **characterised in that** the roller hearth (4) is formed over a part length from at least one section (4a) transversely movable into a lateral position (Y) and the lateral position (Y) is aligned with a surface processing line (11, 12) and **that** the roller hearth has two sections (4a, 4b), which are alternately movable out of the production line (X) transversely into respective lateral positions (Y, Z).

5. Plant according to claim 4, **characterised in that** the oven sections (4a, 4b) are closed at both sides by end closures.

6. Plant according to claim 4, **characterised in that** the surface processing line consists of a hot grinding device (11) and associated roller path (12).

7. Plant according to claim 4, **characterised in that** the surface processing line consists of a flame descaling machine with associated roller path.

8. Plant according to claims 6 and 7, **characterised in that** the roller path (12) is shielded against heat losses.

## Revendications

1. Procédé pour la fabrication de tôles en acier précieux ou en acier au carbone à partir de brames minces d'une épaisseur de 40 à 100 mm obtenues à partir d'un produit coulé, le brin de brame mince étant divisé en sections (2a), transporté à travers une ligne de chauffage (4) et ensuite laminé en continu, une section (2a) de brame mince chauffée étant amenée transversalement d'une ligne de production (X) dans une position latérale (Y), **caractérisé en ce que** les vides formés dans le four sont fermés par une section de four (4b) se trouvant en position d'attente (Z), **en ce que** la section de brame mince se trouvant dans la position latérale (Y) est usinée sur les surfaces avec transport longitudinal puis est transportée en retour dans la position de chauffage latéral et est ramenée transversalement en étant chauffée dans la ligne de production (X).

2. Procédé selon la revendication 1, **caractérisé en ce que** les surfaces de la section (2a) de brame mince sont usinées par des boucles de chauffage.

3. Procédé selon la revendication 1, **caractérisé en ce que** les surfaces de la section (2a) de brame mince sont usinées par des flammes.

4. Installation pour réaliser le procédé selon la revendication 1, qui est constituée par une installation de coulée continue (1) pour brames minces (2), une cisaille de sections transversales (3), un four à foyer à rouleaux (4) et un train de laminage à chaud (6), **caractérisée en ce que** le four à foyer à rouleaux (4), sur une longueur partielle, est formé par au moins une section (4a) pouvant être déplacée transversalement dans une position latérale (Y) et **en ce que** la position latérale (Y) est alignée avec une ligne (11, 12) d'usinage de surface et **en ce que** le four à foyer à rouleaux présente deux sections (4a, 4b) qui peuvent être déplacées alternativement et transversalement de la ligne de production (X) dans à chaque fois une position latérale (Y ou Z).

5. Installation selon la revendication 4, **caractérisée en ce que** les sections de four (4a, 4b) sont pourvues des deux côtés de fermetures d'extrémité.

6. Installation selon la revendication 4, **caractérisée en ce que** la ligne d'usinage de surface est constituée d'un dispositif de chauffage à boucle (11) et d'un train de rouleaux (12) associé.

7. Installation selon la revendication 4, **caractérisée en ce que** la ligne d'usinage de surface est constituée d'une machine à flammes avec un train de rouleaux associé.

8. Installations selon les revendications 6 et 7, **caractérisée en ce que** le train de rouleaux (12) est protégé contre les pertes de chaleur.
